# EUROPÄISCHE PATENTSCHRIFT

(11) **EP 0 776 756 B1**
(45) Veröffentlichungstag und Bekanntmachung des Hinweises auf die Patenterteilung: **22.04.1998**
(21) Anmeldenummer: 96119209.3
(22) Anmeldetag: 29.11.1996
(51) Int. Cl.: B29D 30/20

(54) **Herstellung von Fahrzeugluftreifen**
Manufacture of pneumatic tyres for vehicles
Confection de pneus pour véhicules

(30) Priorität: 29.11.1995 DE 19544369
(43) Veröffentlichungstag der Anmeldung: 04.06.1997
(73) Patentinhaber: Continental Aktiengesellschaft, 30165 Hannover (DE)
(72) Erfinder: Sergel, Horst, 30657 Hannover (DE); Blickwedel, Holger, Dr., 30169 Hannover (DE); Gaida, Markus, 30171 Hannover (DE)

(56) Entgegenhaltungen:
- EP-A- 0 026 315
- EP-A- 0 105 048
- EP-A- 0 448 407
- EP-A- 0 555 813

## Beschreibung

Die Erfindung betrifft eine Vorrichtung zum Aufbau von Fahrzeugluftreifen und ein Verfahren zum Wechseln wesensgleicher Bauteile zum Aufbau eines Karkassenpakets auf einer Karkasstrommel innerhalb einer Karkassaufbaustation oder zum Aufbau eines Gürtelpakets auf einer Gürteltrommel innerhalb einer Gürtelaufbaustation für die Herstellung von Fahrzeugluftreifen.

Zur Herstellung von Fahrzeugluftreifen mit Karkasse und Gürtel wird üblicherweise einerseits ein Karkasspaket mit einer Innenschicht, einer oder mehreren Karkasslagen, zwei Reifenseitenteilen und zwei Kernwülsten in einer Aufbaustation auf einer Karkasstrommel aufgebaut. Unabhängig hiervon wird ein Gürtelpaket mit mehreren Stahlgürtellagen, einer Gürtelbandage und einem Laufstreifen in einer Aufbaustation auf einer Gürteltrommel aufgebaut. Im Anschluß daran wird das Karkasspaket in eine Zusammenführeinrichtung transportiert. Das Gürtelpaket wird ebenfalls in die Zusammenführeinrichtung transportiert und dort über das Karkasspaket geschoben. In der Zusammenführeinrichtung wird dann mit Hilfe eines Bombierkopfes die Karkasse bombiert, d.h. radial expandiert, und so von radial innen in Verbindung mit dem umgebenden, konzentrischen Gürtelpaket gebracht.

Der komplette Aufbau des Karkasspakets innerhalb nur einer Aufbaustation auf eine Karkasstrommel sowie des Gürtelpakets innerhalb nur einer Aufbaustation auf eine ortsfeste Gürteltrommel hat den Nachteil, daß die einzelnen Bauteile-Innenschicht,Karkassenlagen, Seitenwände, Kernwülste bzw. Gürtellagen, Bandage, Laufstreifen- chronologisch nacheinander der Karkasstromel bzw. Gürteltrommel zugeführt und vollständig auf diese aufgelegt werden. Erst nach vollständigem Abschluß der Bestückung mit einem dieser Bauteile kann die Karkasstrommel bzw. die Gürteltrommel mit dem nächsten Bauteil bestückt werden. Die Herstellung eines neuen Karkasspakets bzw. eines neuen Gürtelpakets kann somit erst begonnen werden, wenn die alte Karkasstrommel bzw. die alte Gürteltrommel vollständig bestückt sind und die ortsfeste Karkassaufbaustation bzw. Gürtelaufbaustation wieder nach Entfernen des alten Karkass- bzw. Gurtelpakets von der Karkass- bzw. Gürteltrommmel entfernt ist. Ein derartiger Reifenaufbau läßt nur sehr geringe Produktionsgeschwindigkeiten zu, da Karkasspakete und Gürtelpakete zunächst in einer ortsfesten Aufbaustation komplett fertiggestellt sein müssen, bevor mit dem Aufbau eines neuen Pakets in dieser Aufbaustation begonnen werden kann.

Zum Wechsel der Reifengrößen wird häufig ein Wechsel der Karkasstrommelgröße bzw. der Gürteltrommelgröße erforderlich. Hierzu muß bei derartigen Anlagen der komplette Produktionsbetrieb stillgelegt werden. Beim Wechsel von Bauteilgrößen, beispielsweise der Größen der Innenschicht, der Seitenwände, der Kernwülste, der Karkasslagen, der Gürtellagen, der Bandagen oder des Laufstreifens muß entweder zunächst der komplette Vorrat der alten Größe aufgebraucht oder unter zusätzlichem Zeitverlust mit zusätzlichem Aufwand das Restmaterial aus der Förder- und Bestückungseinrichtung beseitigt werden. Derart aufwendige, kostenintensive Trommel- bzw. Bauteilwechsel sind wirtschaftlich erst ab relativ hohen Mindestlosgrößen sinnvoll. Dem zunehmenden Wunsch nach kleinen und häufig wechselden Losgrößen wird eine derartige Reifenherstellung nicht gerecht.

Es ist bekannt zur Erhöhung der Flexibilität örtlich von einander getrennte Aufbaustationen für verschiedene vorkonfektionierte Bauteile (z.B. Seitenwand und Wulstprofil, Innenschicht, Karkasslagen, Wulstkern) zum Aufbau der Karkasse vorzusehen. Dabei wird eine Karkasstrommel von einer Aufbaustation, auf der sie mit einem ersten Bauteil bestückt wird zur nächsten Aufbaustation, auf der sie mit einem weiteren Bauteil bestückt wird, bewegt. Derartige Karkassaufbaustationen mit bewegten Karkasstrommeln ermöglichen durch Einsatz mehrerer bewegter Karkasstrommeln eine schnellere Produktion. Noch während eine erste Karkasse auf einer ersten Karkasstrommel gefertigt wird, kann bereits der Aufbau einer zweiten Karkasse auf einer zweiten Karkasstrommel begonnen werden. Da jedoch auch bei diesen bekannten Anlagen alle Aufbaustationen hinsichtlich ihrer jeweils einzigen Bestückungseinrichtung für jedes wesensunterschiedliche vorkonfektionierte Bauteil von der Dimension des Reifens abhängig sind, erfordert ein Dimensionswechsel auch hier einen kompletten Stillstand der Produktion, um die Bestückungseinrichtungen mit den Bestückungswerkzeugen für die jeweilige Dimension auszutauschen. Auch derartigen Reifenherstellungsverfahren mangelt es an Flexibilität hinsichtlich eines schnellen Wechsels der Dimension von Bauteilen und Reifen. Kleine sowie häufig wechselnde Losgrößen sind nicht ohne weiteres wirtschaftlich, sondern nur mit Zeitverlust und zusätzlichem Aufwand durchführbar.

Ein zusätzlicher Einsatz einer zusätzlichen zweiten kompletten Anlage zur Reifenherstellung mit eigenständigen Einrichtungen zur Herstellung des Karkassenpakets und zur Herstellung des Gürtelpakets sowie einer eigenständiger Zusammenführeinrichtung mit Bombierkopf ermöglicht zwar einen Dimensionswechsel ohne kompletten Produktionsstillstand, jedoch nur durch komplettes Stillegen der einen vollständigen Anlage unter Aufrechterhaltung der Produktion in der anderen vollständigen Anlage. Dies erfordert jedoch einen erheblichen Mehraufwand gegenüber lediglich einer einzigen vollständigen Anlage für komplette Zweiteinrichtungen zur Fertigung des Karkassen- und des Gürtelpakets einschließlich einer zweiten Zusammenführeinrichtung und eines zweiten Bombierkopfs. Außerdem bedarf es eines erheblichen zusätzlichen Aufwands zur Bereitstellung des für zwei vollständige Anlagen erforderlichen Raums, sowie hohe Kosten für Wartung, Personal und Ersatzteile. Bei Ausfall eines Bestückungswerkzeugs fällt eine komplette Anlage aus. Die komplette Produktion hängt an der anderen Anlage.

Der Einsatz lediglich einer kompletten Anlage mit eigenständiger Einrichtung zur Herstellung des Karkasspakets, eigenständiger Anlage zur Herstellung des Gürtelpakets und eigenständiger Zusammenführeinrichtung mit Bombierkopf ist in ihrer Produktionsgeschwindigkeit vor allen Dingen durch die zeitaufwendigen Aufbauschritte zur Zufuhr und zur Bestückung mit den einzelnen Bauelementen bei gewünschter Sicherstellung einer hohen Produktqualität beschränkt. Die kostenaufwendigen Zusammenführeinrichtungen sind hingegen auch für höhere Geschwindigkeiten ohne Qualitätsverlust geeignet. Somit bieten herkömmliche komplette Aufbauanlagen für Fahrzeugluftreifen die Wahl entweder besonders schnell bei optimierter Zusammenführung, aber unter möglichen Qualitätseinbußen beim Aufbau, oder aber, unter Aufrechterhaltung einer guten Qualität langsam, aber mit ineffizienter Zusammenführung zu arbeiten. Die Verwendung einer zweiten kompletten Anlage ermöglicht durch reduzierte Produktionsgeschwindigkeit der einzelnen kompletten Anlage zwar eine Sicherstellung guter Reifenqualität bei einer insgesamt durch beide Anlagen zusammen gesehen schnellen Produktion. Allerdings ist der zusätzliche Aufwand an Bauteilen, an Raum, Kosten, Personal, Instandhaltung und Wartung für eine zweite komplette Anlage außerordentlich hoch. Insbesondere sind auch hier zwei komplette Zusammenführstationen zur Beibehaltung guter Produktqualität ineffizient genutzt. Bei Ausfall eines Bestückungswerkzeugs steht der Produzent vor der Problematik einer einzigen Anlage, jedoch unter Beibehaltung der Kosten und des Aufwands der vollständigen zweiten Anlage.

Aus der EP 0 448 407 ist es bekannt, beispielsweise Seitenteile wahlweise über drei Fördereinrichtungen einer Rohlingsaufbaustation zuzuführen, wobei die Bestückung der Aufbautrommel durch eine gemeinsame Bestückungseinrichtung erfolgt.

In gewissem Rahmen wird dabei die Flexibilität durch die Wechselbarkeit der Förderwege erhöht. Bei Erfordernis des Wechsels von Elementen der Bestückungseinrichtung zur Anpassung an unterschiedliche Bauteildimensionen oder an unterschiedliche Produktanforderungen oder bei Schäden innerhalb der Bestückungseinrichtung ist eine Anpassung der Bestückungseinrichtung nur mit Maschinenstop möglich. Eine zufriedenstellende Flexibilität ist auch hier nicht gewährleistet.

Der Erfindung liegt die Aufgabe zugrunde, eine Vorrichtung und ein Verfahren zu schaffen, mit denen mit geringem Aufwand mit hoher Produktqualität eine höhere Flexibilität auch bei schneller Reifenfertigung ermöglicht wird.

Erfindungsgemäß wird die Aufgabe durch die Vorrichtung zum Aufbau von Fahrzeugluftreifen gemäß den Merkmalen von Anspruch 1 sowie durch das Verfahren zum Wechseln wesensgleicher Bauteile zum Aufbau von Karkasspaketen auf einer Karkasstrommel innerhalb einer Karkassenaufbaustation oder zum Aufbau eines Gürtelpakets auf einer Gürteltrommel innerhalb einer Gürtelaufbaustation für die Herstellung von Fahrzeugluftreifen gemäß den Merkmalen von Anspruch 7 gelöst.

Die Ausbildung einer Vorrichtung zum Aufbau von Fahrzeugluftreifen für verschiedene wesensgleiche Bauteile jeweils mit eigenständigen Karkassenaufbaustationen sowie jeweils für verschiedene wesensgleiche Gürtelbauteile jeweils mit eigenständigen Gürtelaufbaustationen mit bewegbar gesteuerter Karkasstrommel sowie mit bewegbar gesteuerter Gürteltrommel und einer eigenständigen Zusammenführeinrichtung ermöglicht einen schnellen Aufbau des Karkasspakets auf die Karkasstrommel bzw. eines Gürtelpakets auf die Gürteltrommmel. Sobald eine Karkasstrommel bzw. eine Gürteltrommel eine Karkassaufbaustation bzw. Gürtelaufbaustation verlassen hat, um auf einer nächsten Aufbaustation mit dem nächsten Bauteil bestückt zu werden, kann eine neue Karkasstrommel bzw. Gürteltrommel in die frei gemachte Karkassaufbaustation bzw. Gürtelaufbaustation zur Bestückung eingebracht werden. Die Ausbildung zumindest einer Karkass- und/oder einer Gürtelaufbaustation mit zumindest zwei von einander unabhängig steuerbaren Bestückungseinrichtungen zur Bestückung mit wesensgleichen Bauteilen und mit zu jeder dieser Bestückungseinrichtungen jeweils einer zuzuordnenden Fördereinrichtung zur Zulieferung der wesensgleichen Bauteile ermöglicht ein schnelles Umrüsten dieser Karkass- und/oder Gürtelaufbaustation beim Wechsel der Dimension dieser wesensgleichen Bauteile. Ohne Produktionsstop kann die eine Bestückungseineinrichtung und, falls erforderlich, auch deren Fördereinrichtung zur Zulieferung für die neue Dimension umgerüstet werden, während gleichzeitig die Bestückung mit Bauteilen in dieser Aufbaustation durch die andere Bestückungseinrichtung und deren Fördereinrichtung erfolgt. Da somit wesensgleiche Bauteile auch in Dimensionen mit nur kleinen Losgrößen ohne größeren Aufwand in einer Aufbaustation verarbeitet werden können, kann eine derartige Vorrichtung wesentlich flexibler eingesetzt werden. Gegenüber zwei kompletten Anlagen zur Fahrzeugluftreifenherstellung wird lediglich eine Zusammenführeinrichtung benötigt. Der Aufwand an Raum, Platz, Investitionen, Personal und Bauteilen sowie für die Wartung wird reduziert.

Bei einer Vorrichtung zum Aufbau von Fahrzeugluftreifen mit sowohl zumindest einer Karkass- als auch zumindest einer Gürtelaufbaustation mit jeweils zumindest zwei voneinander unabhängig steuerbaren Bestückungseinrichtungen zur Bestückung mit jeweils wesensgleichen Bauteilen und mit je einer der jeweiligen Bestückungseinrichtung zuzuordnenden Fördereinrichtung zur Zulieferung der wesensgleichen Bauteile wird zudem die Kombinationsmöglichkeit verschiedener Dimensionen wesensgleicher Gürtelbauteile mit verschiedenen Dimensionen wesensgleicher Karkassbauteile vereinfacht. Ohne größeren Zeitaufwand kann zum Beispiel zunächst ein größeres wesensgleiches Karkassbauteil mit einem größeren wesensgleichen Gürtelbauteil für einen Fahrzeugreifen kombiniert werden. Im Anschluß daran kann beispielsweise das größere wesensgleiche Gürtelbauteil mit einem kleineren wesensgleichen Karkassbauteil, im Anschluß daran für einen anderen Fahrzeugreifen das kleinere wesensgleiche Karkassbauteil mit einem kleineren wesensgleichen Karkassbauteil und im Anschluß daran das kleinere wesensgleiche Karkassbauteil mit einem größeren wesensgleichen Gürtelbauteil kombiniert werden. Dies ist ohne aufwendige Montage oder Werkzeugwechsel und ohne Maschinenstop möglich. Es bedarf lediglich des Wechsels des Produktionseinsatzes der den einzelnen Aufbaustationen mehrfach pro wesensgleichem Bauteil zugeordneten Bestückungseinrichtungen entsprechend den Produktionswünschen. Die Umrüstung einer Bestückungseinrichtung kann erfolgen, während die andere im Betrieb ist.

Bevorzugt ist zumindest eine Karkassenaufbaustation zum Aufbau von Seitenwänden mit zumindest zwei unabhängig voneinander steuerbaren Bestückungseinrichtungen für jeweils eine Seitenwand eines Reifens und mit jeweils einer zuzuordnenden Fördereinrichtung pro Bestückungseinrichtung ausgebildet. Gerade das sehr aufwendige Wechseln der Seitenwanddimensionen für ein Karkasspaket stellt ein erhöhtes Flexibilitätsproblem dar. Durch die mindestens zwei Bestückungseinrichtungen mit eigenständiger Fördereinrichtung kann somit der Dimensionswechsel der Seitenwände einfach und schnell durchgeführt werden. Es ist auch denkbar, in dieser Karkassaufbaustation beispielsweise das Wulstprofil und somit ein anderes Bauteil zusätzlich in einer eigenen Bestückungseinrichtung zuzuführen. Zur Verbesserung der Flexibilität kann auch dieses Bauteil durch zumindest zwei unabhängig voneinander steuerbare Bestückungseinrichtungen mit jeweils einer zuzuordnenden Fördereinrichtung pro Bestückungseinrichtung in dieser Karkassenaufbaustation zugeführt werden.

Bevorzugt wird eine Vorrichtung, bei der zumindest eine Gürtelaufbaustation zum Aufbau von Gürtellagen auf einer Gürteltrommel mit zumindest zwei unabhängig voneinander steuerbaren Bestückungseinrichtungen pro Gürtellage und mit jeweils einer einer jeden Bestückungseinrichtung zuzuordnenden Fördereinrichtung ausgebildet ist. Hierdurch wird der besonders aufwendige Dimensionswechsel von Gürtellagen wesentlich vereinfacht.

Zur Erhöhung der Flexibilität im Karkassenaufbau sind vorteilhafterweise alle Karkassaufbaustationen mit zumindest zwei unabhängig voneinander steuerbaren Bestückungseinrichtungen zur Bestückung mit wesensgleichen Bauteilen mit jeweils einer einer jeden Bestückungseinrichtung zuzuordnenden Fördereinrichtung zur Zulieferung von wesensgleichen Bauteilen ausgebildet. Zur Erhöhung der Flexibilität im Bereich der Gürtelaufbaustationen ist vorteilhafterweise jede Gürtelaufbaustation mit zumindest zwei unabhängig voneinander steuerbaren Bestückungseinrichtungen zur Bestückung mit wesensgleichen Bauteilen mit jeweils einer einer jeden Bestückungseinrichtung zuzuordnenden Fördereinrichtung zur Zulieferung der wesensgleichen Bauteilen ausgebildet.

In einer bevorzugten Ausführungsform ist die Karkasstrommel als Bombierkopf ausgebildet. Die Karkasstrommel kann mit auf ihr aufgebautem Karkasspaket wird in die Zusammenführstation bewegt werden. Nach Überschieben des Gürtelpakets kann das Karkasspaket durch die Karkasstrommel bombiert werden. Ein zusätzlicher Wechsel des Karkasspakets von der Karkasstrommel auf einen eigenständigen Bombierkopf kann entfallen.

Die Erfindung wird im folgenden anhand der in den Figuren 1 bis 3 dargestellten Ausführungsbeispielen näher erläutert.
Hierin zeigen
- Fig. 1: Schema einer erfindungsgemäßen Fahrzeugherstellungsanlage
- Fig. 2: schematischer Querschnitt einer erfindungsgemäßen Bauteilbestückung in einer Aufbaustation am Beispiel der Zulieferung eines Seitenstreifens an die Karkasstrommel.

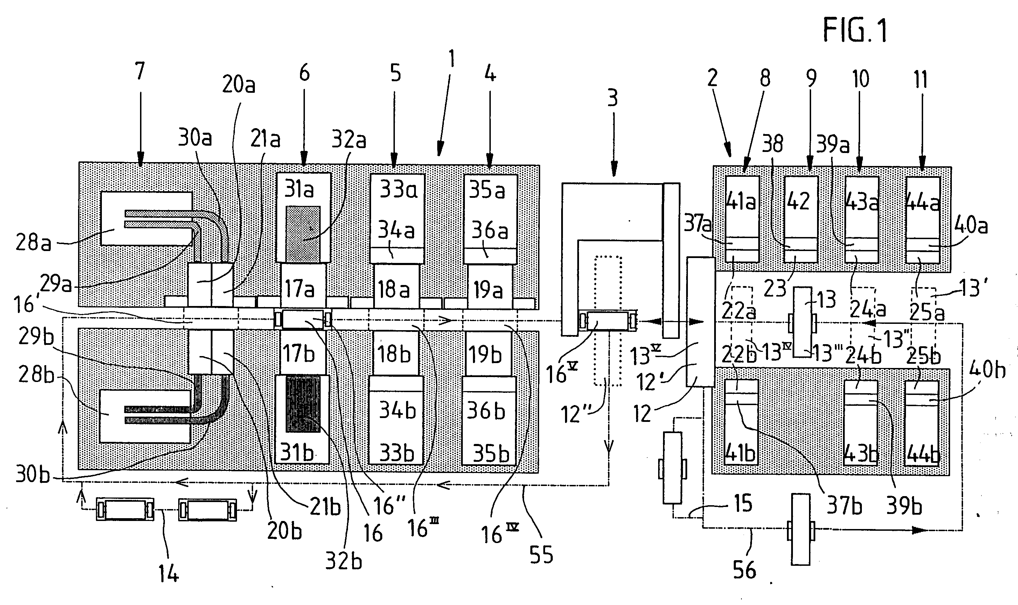

Fig. 1 zeigt in schematischer Darstellung eine Anlage zur Fahrzeugluftreifenfertigung mit einem Anlagenteil für die Karkasspaketfertigung 1, einem Anlagenteil für die Gürtelpaketfertigung 2 und einer Zusammenführeinrichtung 3. Die Karkasspaketfertigung weist in bekannter Weise eine Kernaufbaustation 4, eine Karkasslagenaufbaustation 5, eine Innenschichtaufbaustation 6 sowie eine Aufbaustation 7 zum Aufbau der beiden Reifenseitenwände und der beiden Kernwülste auf. Der Abschnitt der Gürtelpaketfertigung weist in bekannter Weise eine Laufstreifenaufbaustation 8 sowie zwei Gürtellagenaufbaustationen 10 bzw. 11 auf. Entlang eines strichpunktiert schematisch dargestellten schleifenförmigen Weges 55 wird zur Karkasspaketfertigung in bekannter Weise eine Karkasstrommel 16 zunächst in eine Position 16' in der Aufbaustation 7 zum Auflegen der Seitenwände und der Kernwülste bewegt. In dieser Aufbaustation 7 werden zwei vorgefertigte Seitenwandteile bekannter Bauart, entweder aus jeweils einem Vorratsspeicher 28a, von denen nur einer dargestellt ist, über Zuführeinrichtung 29a, von denen nur eine schematisch dargestellt ist, und eine Bestückungseinrichtung 20a, von denen nur eine schematisch dargestellt ist, oder wahlweise aus zweiten Vorratsspeichern 28b über die schematisch nur einfach dargestellten Zuführeinrichtungen 29b sowie über nur einfach dargestellte Bestückungseinrichtungen 21b in bekannter Weise bestückt. Ebenso wird in dieser Aufbaustation 7 wahlweise aus den Vorratsspeicher 28a über Zuführeinrichtungen 30a undBestückungseinrichtungen 21a oder aus den Vorratsspeichern 28b über die Zuführeinrichtungen 30b und Bestückungseinrichtung 21b zwei Kernwulste in bekannter Weise auf die Trommel aufgesetzt. Auch hier sind die Einrichtungen nur für die Zuführung und Bestückung mit einem Kernwulst jeweils nur einfach schematisch dargestellt. Nachdem Seitenteile sowie Kernwulste auf der Karkasstrommel über den Umfang in bekannter Weise montiert sind, wird die Karkasstrommel 16 entlang ihres Weges 55 in eine Postion 16'' in der Innenschichtaufbaustation 6 weiter bewegt. Dort wird die Innenschicht wahlweise aus einem Vorratsspeicher 31a, über Zuführeinrichtungen 32a und eine Bestückungseinrichtung 17a oder aus einem zweiten Vorratsspeicher 31b über Zuführeinrichtungen 32b und eine Bestückungseinrichtung 17b in bekannter Weise über den Umfang der Karkasstrommel 16 aufgelegt.

Im Anschluß daran wird die Karkasstrommel 16 längs ihres Weges 55 in eine Position 16''' in der Karkasslagenaufbaustation 5 bewegt. Hier wird eine Karkasslage aus Kautschuk mit Festigkeitsträgern bekannter Bauart wahlweise aus einem Vorratsspeicher 33a über Zuführeinrichtungen 34a und eine Bestückungseinrichung 18a oder aus einem zweiten Vorratsspeicher 33b über eine zweite Zuführeinrichtung 34b und eine zweite Bestückungseinrichtung 18b in bekannter Weise auf die Karkasstrommel über deren Umfang hinwegreichend aufgelegt. Im Anschluß daran ist es denkbar, daß die Karkasstrommel in eine weitere, nicht dargestellte, Karkasslagenaufbaustation bewegt wird, in der sie ebenfalls wahlweise aus einem ersten Vorratsspeicher über eine erste Zuführeinrichtung und eine erste Bestückungseinrichtung oder aber aus einem zweiten Vorratsspeicher und eine zweite Zuführeinrichtung und eine zweite Bestückungseinrichtung mit einer zweiten Karkassenlage mit Festigkeitsträgern bestückt wird.

Im Anschluß an die Karkasslagenbestückung wird die Karkasstrommel 16 in eine Position 16IV in der Kernaufbaustation bewegt. Hier wird das Karkasspaket wahlweise aus je einem ersten Vorratsspeicher 35a über erste Fördereinrichtungen 36a und eine erste Bestückungseinrichtung 19a oder aus je einem zweiten Vorratsspeicher über zweite Zuführeinrichtungen 36b und eine zweite Bestückungseinrichtung 19b die Karkasse in bekannter Weise mit zwei Reifenkernen bestückt. Die Einrichtungen für Zufuhr und Bestückung sind nur für einen Reifenkern schematisch dargestellt.

Die Karkasstrommel 16 wird nach Fertigstellung des Karkasspakets in eine Position 16V in einer Zusammenführeinrichtung 3 bekannter Bauart bewegt.

Die Vorratsspeicher 28a, 28b, 31a, 31b, 33a, 33b, 35a, 35b sind Vorratsspeicher bekannter Bauart. Ebenso sind die Zuführeinrichtungen 29a, 29b, 30a, 30b, 32a, 32b, 34a, 34b, 36a, 36b Zuführeinrichtungen bekannter Bauart. Beispielsweise ist es denkbar, je nach Anforderungen, die Zufuhreinrichtungen aus Zuführtischen, Saugeinrichtungen wie zum Beispiel bewegten Sauggreifern, Zuführbändern oder bewegte Greifern auszubilden. Ebenso sind die Bestückungseinrichtungen 20a, 20b, 21a, 21b, 17a, 17b, 18a, 18b, 19a, 19b Bestückungseinrichtungen bekannter Bauart, beispielsweise ist es denkbar, je nach Anforderung Greifer, Sauggreifer, Andrückrollen oder andere geeignete Bestückungseinrichtungen zu verwenden.

Zum Gürtelaufbau wird eine Gürteltrommel 13 entlang eines Bewegungspfades 56 zunächst in eine Postion 13' in einer Gürtellagenaufbaustation 11 bewegt. In dieser Position wird die Gürteltrommel wahlweise entweder aus einem ersten Vorratsspeicher 44a über eine erste Zuführeinrichtung 40a und eine erste Bestückungseinrichtung 25a oder aus einem zweitenVorratsspeicher 44b über eine zweite Zuführeinrichtung 40b und eine zweite Bestückungseinrichtung 25b mit einer ersten Gürtellage in bekannter Weise bestückt. Im Anschluß daran wird die Gürteltrommel 13 in eine zweite Position 13'' in einer zweiten Gürtellagenaufbaustation 10 bewegt.

Hier wird die Gürteltrommel wahlweise entweder aus einem ersten Vorratsspeicher 43a über eine erste Zuführeinrichtung 39a und eine Bestückungseinrichtung 24a oder aus einem zweiten Vorratsspeicher 43b über eine zweite Zuführeinrichtung 39b und eine zweite Bestückungseinrichtung 24b in bekannter Weise mit einer zweiten Gürtellage bestückt.

Im Anschluß daran wird die Gürteltrommel in eine Position 13^{IV} in einer Laufstreifenaufbaustation bewegt. Hier wird die Gürteltrommel wahlweise entweder aus einem ersten Vorratsspeicher 41a über eine erste Zuführeinrichtung 37a und eine erste Bestückungseinrichtung 22a oder aus einem zweiten Vorratsspeicher 41b, über eine zweite Zuführeinrichtung 37b und eine zweite Bestückungseinrichtung 22b mit einem Laufstreifen in bekannter Weise bestückt.

Im Anschluß daran wird die Gürteltrommel 13 in eine Position 13^{V} bewegt, in der das Gürtelpaket von einer Gürtelaufnahmeeinrichtung 12 bekannter Bauart, die das Gürtelpaket radial außen umgreift, von der radial innerhalb des Gürtels befindlichen Gürteltrommel 13 in bekannter Weise abgenommen. Die Gürtelaufnahmeeinrichtung 12 wird in bekannter Weise aus dieser Position 12' in eine Position 12'' in der Zusammenführeinrichtung bewegt, so daß sich die Karkasstrommel 16 in ihrer Position 16 V konzentrisch radial innerhalb des Gürtelpaketaufnehmers befindet. In bekannter nichtdargestellter Weise wird die Karkasstrommel zur Bombage expandiert, wobei die Karkasse radial nach außen ausgeweitet wird und den umgebenen Gürtel haftend berührt. In bekannter Weise werden Gürtelpaket und Karkassenpaket miteinander verbunden. Währenddessen ist die Gürteltrommel 13 bereits weiter längs ihres Weges aus ihrer Position 13^{V} heraus bewegt worden und die nachfolgende, bereits in den Gürtelaufbaustationen 11, 10 und 2 bestückte Gürteltrommel kann von der Gürtelpaketaufnehmeeinrichtung 12 in deren Position 12' übernommen werden.

Die Karkasstrommel 16 wird nach Entnahme des aus Karkasspaket und Gürtelpaket gebildeten Reifenrohlings aus ihrer Position 16V weiter längs ihres Wegesgemäß der Pfeildarstellung aus der Zusammenführeinrichtung 3 bewegt. Nach Entfernen der Karkasstrommel aus der Zusammenführeinrichtung 3 kann direkt die nachfolgende bereits in den Aufbaustationen 7, 6, 5, 4 mit einem Karkassenpaket bestückte Karkasstrommel 16 in die Zusammenführeinrichtung 3 bewegt werden.

Es ist denkbar, zwischen die Gürtelaufbaustation 10 und die Laufstreifenaufbaustation 8 eine Gürtelbandageaufbaustation 9 anzuordnen, in der die Gürteltrommel nach ihrer Bestückung mit den Gürtellagen in einer Position 13''' in bekannter Weise mit einer Bandage bestückt wird. Das Bandagematerial kann beispielsweise zum Aufbau einer spiralförmig gewickelten Bandage lediglich über einen Vorratsspeicher 42a, eine Zuführeinrichtung 38a und eine Bestückungseinrichtung 23 zugeführt werden. Die spiralige Wicklung ermöglicht einen relativ einfachen Dimensionswechsel durch leichte Veränderungen der sich überlappenden Windungsbereiche. Ebenso ist es aber auch denkbar auch hier einen zweiten, nicht dargestellten Vorratsspeicher und eine zweite, nicht dargestellte, Zuführeinrichtung und eine zweite, nicht dargestellte Bestückungseinrichtung, vorzusehen. Dies kann insbesondere beim Einsatz nicht spiralig gewickelter Bandagen zur Erhöhung der Flexibilität sinnvoll sein.

Die Vorratsspeicher 41a, 42a, 43a, 44a, 41b, 43b, 44b sind Vorratsspeicher bekannter Bauart. Die Zufuhreinrichtungen 37a, 37b, 23, 39a, 39 b, 40a, 40 b sind Zufuhreinrichtungen bekannter Bauart. Die Bestückungseinrichtungen 22a, 22 b, 23, 24a, 24b, 25a, 25b sind Bestückungseinrichtungen bekannter Bauart.

Beim Dimensionswechsel einzelner wesensgleicher Bauteile, beispielsweise der Reifenkerne, werden bei andauernder Produktion zunächst die Reifenkerne aus dem Vorratsspeicher 35a über die Zuführeinrichtung 36a und die Bestückungseinrichtung 19a zur Bestückung geliefert.

Für einen gewünschten Dimensionswechsel werden bei laufender Produktion Vorratsspeicher 35b, Zuführeinrichtung 36b und Bestückungseinrichtung 19b für die neu zu verwendende Dimension umgerüstet. Sobald der Dimensionswechsel erfolgen soll, werden die Reifenkerne nicht mehr über Vorratsspeicher 35a, Zuführeinrichtung 36a und Bestückungseinrichtung 19a, sondern aus dem Vorratsspeicher 35b, die Zuführeinrichtung 36b und die Bestückungseinrichtung 19b geliefert und die Karkasstrommel bestückt. Ebenso einfach ist auch ein Dimensionswechsel in den anderen Aufbaustationen 7, 6, 5, 8, 10, 11 und falls mit zwei Vorratseinrichtungen, zwei Bestückungseinrichtungen und zwei Zuführeinrichtungen versehen, auch in der Station 9 durch einfaches Umschalten des Bestückungsweges von der jeweils ersten Vorratseinrichtung, der ersten Zuführeinrichtung und der ersten Bestückungseinrichtung auf die jeweils zweiten bereits auf die neue Dimension umgestellten Vorratseinrichtung, die zweite Zuführeinrichtung und die zweiten Bestückungseinrichtung jederzeit möglich.

Je nach Anforderungsprofil für die gewünschte Produktion sind dabei alle denkbaren Kombinationen der verschiedenen ersten und zweiten Bestückungswege der einzelnen Aufbaueinrichtungen miteinander möglich. Beispielsweise ist es denkbar, die Karkasstrommel aus den Vorratsbehältern 28a, 31a, 33a, 35a jeweils über die Zuführeinrichtungen 29a, 30a, 32a, 34a, 36a und die Bestückungseinrichtungen 20a, 21a, 17a, 18a, 19a zu bestücken und dabei die entsprechende Gürteltrommel aus den Vorratseinrichtungen 41a, 42, 43a, 44a, die zugehörigen Zuführeinrichtungen 37a, 38a, 39a, 40a und über die Bestückungseinrichtungen 22a, 23, 24a, 25a zu bestücken. Ebenso kann ein Gürtelpaket zu einem derartig bestückten Karkasspaket aus den Vorratsspeichern 44b, 43b, 41b und die Zuführeinrichtungen 40b, 39b, 37b und die zugehörigen Bestückungseinrichtungen 25b, 24b, 22b, falls sinnvoll, bestückt werden. Ebenso könnte auch der Gürtel aus den Speichern 41a, 42, 43b, 44a über die Zuführeinrichtungen 37a, 38, 39b, 40a sowie die Bestückungseinrichtung 22a, 23, 24b, 25a bestückt werden.

Auch das Karkasspaket kann wahlweise entweder komplett über die ersten oder über die zweiten Bestückungswegen bestehend aus ersten Vorratsspeichern, ersten Zuführeinrichtungen und ersten Bestückungseinrichtungen bzw. aus zweiter Vorratseinrichtung, zweiter Zuführeinrichtung und zweiter Bestückungseinrichtung aufgebaut werden. Ebenso ist es denkbar, ein Karkasspaket auch teilweise in einzelnen Aufbaustationen über den ersten Bestückungsweg bestehend aus ersten Vorratseinrichtungen und erster Zufuhreinrichtungen und ersten Bestückungseinrichtungen und in anderen Aufbaustationen über den zweiten Bestückungsweg bestehend aus zweiter Vorratseinrichtung, zweiter Zuführeinrichtung und zweiter Bestückungseinrichtung aufzubauen. Somit ist eine hohe Kombinationsvielfalt der verschiedenen Bestückungswege sowohl zum Aufbau des Karkasspakets als auch zum Aufbau desGürtelpakets und für das Gesamtpaket bestehend aus Gürtelpaket und Karkasspaket möglich.

Falls erforderlich, sind auch drei oder mehr Bestückungswege, bestehend jeweils aus zumindest einer Vorratseinrichtung, zumindest einer Zuführeinrichtung und Bestückungseinrichtung in einer oder mehreren Aufbaustationen für ein Bauteil möglich, beispielsweise ist es denkbar, drei Bestückungswege für eine Karkassenlage in Aufbaustation 5 auszubilden.

Es ist auch denkbar, parallel zum Karkassenweg 55 eine oder mehrere Vorratsschleifen 14 auszubilden, in denen Karkasstrommeln 16 gelagert werden, falls erforderlich in den Karkassenweg 55 eingeführt werden können. Durch mehrere parallele nicht dargestellte Vorratsschleifen können unterschiedlichste Größen an Karkasstrommeln geordnet gelagert und jederzeit, entsprechend der gewünschten Dimension, schnell in den Karkassenweg 55 eingeführt werden. In analoger Weiseist es denkbar, auch eine oder mehrere zum Gürtelwagenweg 56 parallele Vorratsschleifen 58 vorzusehen. Die Gürteltrommelwagen warten hier in einer Vorratsposition, um, falls erforderlich, in den Gürtelwagenweg 56 in bekannter, nicht dargestellter Weise eingeführt zu werden.

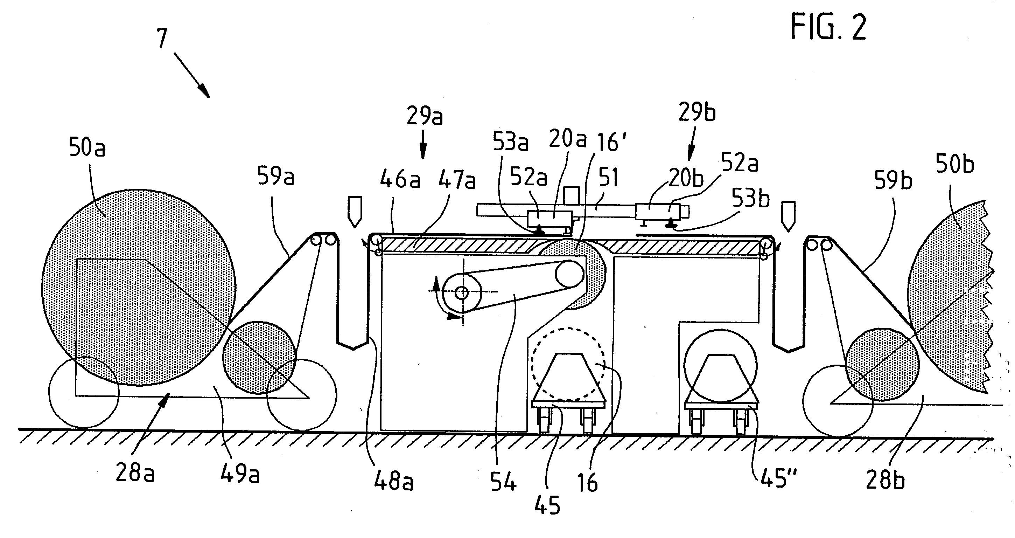

In Figur 2 ist beispielhaft eine Aufbaustation und zwar am Beispiel der Aufbaustation 7 zur Bestückung mit Seitenwänden und Kernwülsten schematisch in Querschnittsdarstellung für die Erläuterung der Zulieferung und Bestückung mit einer Seitenwand dargestellt. Auf jeweils einem Kassettenwagen 49a, b der Vorratsspeicher 28a, b, sind jeweils in bekannter Weise Speicherkassetten 50a, b mit bandförmig aufgewickeltem Seitenstreifenmaterial 59a, b aus Kautschuk gelagert. Das Seitenstreifenmaterial 59a, b wird von den Lagerrollen 50a, b in bekannter Weise über Zuführeinrichtungen 29a, b auf die in der Pos. 16' befindliche Karkasstrommel mit Hilfe der Bestückungseinrichtungen 20a, b aufgelegt. Zur Vermeidung von unzulässigen Spannungen im Bereich des Zuführtischs 47a, b wird im Seitenstreifenband 59a, b in bekannter Weise zwischen Speicherkassette 50a, b und Zuführtisch 47a, b eine Speicherschleife 48a, b ausgebildet. Über um den Zuführtisch 47a, b umlaufende Förderbänder 46a, b wird das Seitenstreifenband 59 a, b aus der Speicherschleife 48a, b herausgezogen und in den Einflußbereich von 52a, b der Bestückungseinrichtung 20a, b gefördert. Hubschleppsauger 53 a, b bekannter Bauart saugen den im Bereich des Zuführtischs 47a, b in bekannter Weise in seiner Länge entsprechend den Anforderungen geschnittenen Seitenstreifen an und bestücken hiermit die Karkasstrommel 16. In bekannter Weise wird die Karkasstrommel 16, die zur Bestückung von einem Schwenkhebel 54 aus dem Karkasswagen 45 in eine Position 16' angehoben wurde, während der Bestückung in ihrer Lagerung im Schwenkhebel um ihre Umfangsrichtung gedreht, so daß der Seitenstreifen die Karkasstrommel 16 über ihren Umfang umwickelt. Im Anschluß daran wird der Schwenkhebel 54 nach unten geschwenkt und setzt die Karkasstrommel in ihre Lagerung in den Karkasstrommelwagen 45 ein. Der Karkasstrommelwagen 45 wird in Führungsschienen bekannter Bauart geführt zur nächsten Aufbaustation bewegt.

Dabei ist es denkbar, daß der Karkasswagen 45 mit Hilfe eines eingebauten nicht dargestellten Elektromotors oder mit bekanntem externen Kettenantrieb angetrieben wird. Es ist auch denkbar, an jeder Aufbaustation Impulsgeber vorzusehen, deren Impulse für Start- bzw. Stop des Karkasswagens von Sensoren im Karkasswagen aufgenommen und in Antriebssteuersignale für den Elektromotor umgesetzt werden. Derartige Signale können beispielsweise mit Hilfe von Induktionsgebern, Lichtschranken, Mikrowellensendern, Infrarotlichtquellen, aber auch mit Hilfe von mechanischen Schaltern bekannnter Bauaurt auf entsprechend ausgebildeten Empfängern bekannter Bauart in bekannter Weise übertragen werden.

Wie in Fig. 2 dargestellt ist, ist es auch denkbar, die Karkasswagen mit leerer Karkasstrommel auf ihrem Rückweg von der Zusammenführeinrichtung 3 unterhalb eines Zuführtischs geführt zurückzubewegen. Eine derartige Rückwegposition ist in Fig. 2 mit dem Bezugszeichen 45II dargestellt.

In gleicher Weise können auch die Gürteltrommelwagen ausgestattet und zurückbewegt werden.

Es ist auch denkbar, am Beispiel von Figur 2 das Seitenstreifenband 59a bzw. b in bekannter, ungeschnittener Weise auf einen Zuführtisch 47a bzw. 47b zu fördern und mit den Hubsaugern 53a bzw. 53b das Seitenstreifenband 59a bzw. b unabgelängt aufzunehmen und die Karkasstrommel zu bestücken. Durch Umdrehung der Karkasstrommel wird das Seitenstreifenband 59a bzw. b auf die Karkasstrommel gewickelt und entsprechend der gewünschten Umfangslänge abgelängt.

Die Winkelposition der beiden Bestückungseinrichtungen, beispielsweise der Hubsauger 53a bzw. 53b von Figur 2, zueinander in Bezug auf die Aufbautrommel ist individuell den jeweiligen Erfordernissen entsprechend wählbar. Beispielsweise ist es denkbar, die Hubsauger in Figur 2, nicht, wie dargestellt unter einem Winkel von ca. 180°, sondern unter einem Winkel von beispielsweise 135°, von 90° oder von 77° zueinander auszubilden. In Figur 2 kann dies zusätzlich Raum einsparen.

## Patentansprüche

1. Vorrichtung zum Aufbau von Fahrzeugluftreifen mit einem Karkassenpaket mit Innenschicht, zumindest einer Karkassenlage, zwei Reifenseitenteilen und zwei Reifenkernwulsten und mit einem Gürtelpaket mit zumindest einer Gürtellage und einem Laufstreifen
- mit zumindest vier Karkassenaufbaustationen (4, 5, 6,7)
- von denen eine (6) zum Aufbau der Innenschicht auf eine Karkassentrommel,
- von denen eine (7) zum Aufbau von Reifenseitenwänden auf die Karkasstrommel,
- von denen eine (5) zum Aufbau zumindest einer Karkasslage auf die Karkasstrommel,
- von denen eine (4) zum Aufbau von Reifenkernen auf die Karkasstrommel ausgebildet ist,
- wobei die einzelnen Karkassenaufbaustationen örtlich voneinander getrennt angeordnet sind,
- mit zumindest einer zwischen diesen Karkassaufbaustationen gesteuert bewegbarer Karkasstrommel (16),
- wobei die einzelnen Karkassaufbaustationen (4, 5, 6, 7) jeweils mit zumindest einer Bestückungseinrichtung zur Bestückung der Karkasstrommel mit wesensgleichen Bauteilen und mit zumindest jeweils einer Fördereinrichtung zur Zulieferung der Bauteile zur Bestückungseinrichtung ausgebildet sind,
- mit zumindest zwei Gürtelaufbaustationen (8, 10)
- von denen eine zum Aufbau zumindest einer Gürtellage (10) auf eine Gürteltrommel,
- und die andere zum Aufbau eines Laufstreifens (8) auf die Gürteltrommel ausgebildet ist,
- wobei die einzelnen Gürtelaufbaustionen örtlich voneinander getrennt angeordnet sind,
- mit zumindest einer zwischen diesen Gürtelaufbaustationen gesteuert bewegbaren Gürteltrommel (13),
- wobei die einzelnen Gürtelaufbaustationen (8, 10) jeweils mit zumindest einer Bestückungseinrichtung zur Bestückung der Gürteltrommel mit wesensgleichen Bauteilen und mit zumindest jeweils einer Fördereinrichtung zur Zulieferung der Bauteile zu dieser Bestückungseinrichtung ausgebildet sind,
- mit einer Vorrichtung (3) zum Zusammenführen der in den Karkassenaufbaustationen auf die Karkasstrommel aus den einzelnen Bauteilen aufgebauten Karkasse und dem in den Gürtelaufbaustationen aus den einzelnen Bauteilen auf die Gürteltrommel aufgebauten Gürtelpaket,
- wobei zumindest eine Karkass- und/oder eine Gürtelaufbaustation mit zumindest zwei voneinander unabhängig steuerbaren Bestückungseinrichtungen zur Bestückung mit wesensgleichen Bauteilen ausgebildet ist, denen jeweils zumindest eine Fördereinrichtung zur Zulieferung der wesensgleichen Bauteile zugeordnet ist.

2. Vorrichtung zum Aufbau von Fahrzeugluftreifen gemäß den Merkmalen von Anspruch 1,
- wobei zumindest eine Karkassenaufbaustation (7) zum Aufbau von Seitenwänden mit zumindest zwei unabhängig voneinander steuerbaren Bestückungseinrichtungen (20a, 20b) pro Seitenwand eines Reifens und mit jeweils einer zuzuordnender Fördereinrichtung (29a, b) pro Bestückungseinrichtung ausgebildet ist.

3. Vorrichtung zum Aufbau von Fahrzeugluftreifen gemäß den Merkmalen von Anspruch 1 oder 2,
- wobei alle Karkassaufbaustationen (4, 5, 6, 7) mit zumindest zwei unabhängig voneinander steuerbaren Bestückungeinrichtungen (20a, 20b, 17a, 17b, 18a, 18b, 19a, 19b) mit jeweils einer Fördereinrichtung (29a, b, 32a, b, 34a, b, 36 a, b) zur Zulieferung von wesensgleichen Bauteilen ausgebildet sind.

4. Vorrichtung zum Aufbau von Fahrzeugluftreifen gemäß den Merkmalen von einem oder mehreren der Ansprüche 1 bis
3, bei der zumindest eine Gürtelaufbaustation (10) zum Aufbau von Gürtellagen auf einer Gürteltrommel mit zumindest zwei unabhängig voneinander steuerbaren Bestückungseinrichtungen (24a, b) pro Gürtellage mit jeweils einer Fördereinrichtung (39a, b) ausgebildet ist.

5. Vorrichtung zum Aufbau von Fahrzeugluftreifen gemäß den Merkmalen von einem oder mehreren der Ansprüche 1 bis 4,
wobei jede Gürtelaufbaustation (8, 10, 11) zumindest zwei unabhängig voneinander steuerbare Bestückungseinrichtungen (22a, b, 24a, b, 25a, b) mit jeweils einer Fördereinrichtung (37a, b, 39a, b, 40a, b) zur Zulieferung von wesensgleichen Bauteilen ausgebildet ist.

6. Vorrichtung zum Aufbau von Fahrzeugluftreifen gemäß den Merkmalen von einem oder mehreren der Ansprüche 1 bis 5,
wobei die Karkasstrommel (16) als Bombierkopf ausgebildet ist.

7. Verfahren zum Wechseln vorkonfektionierter wesensgleicher Bauteile zum Aufbau von Karkasspaketen, mit Innenschicht, mit zumindest einer radial äußerer mit Festigkeitsträgern bestückter Karkassenschicht und mit zwei Reifenseitenteilen auf einer Karkasstrommel innerhalb einer Karkassenaufbaustation und/oder zum Aufbau eines Gürtelpakets mit mit Festigkeitsträgern bestückter Gürtellage und einem Laufstreifen auf einer Gürteltrommel innerhalb einer Gürtelaufbaustation für die Herstellung von Fahrzeugluftreifen,
- bei der wesensgleiche Bauteile zumindest teilweise wahlweise von einer von zumindest zwei verschiedenen Bestückungseinrichtungen zur Bestückung der gleichen Aufbaustation zugeführt werden.

## Claims

1. Apparatus for the construction of pneumatic vehicle tyres having a carcase bundle with an internal layer, at least one carcase ply, two lateral tyre portions and two tyre bead cores and having a belt bundle with at least one belt ply and one tread strip
- with at least four carcase constructing stations (4, 5, 6, 7),
- of which one (6) is provided to construct the internal layer on a carcase drum,
- of which one (7) is provided to construct lateral tyre walls on the carcase drum,
- of which one (5) is provided to construct at least one carcase ply on the carcase drum, and
- of which one (4) is provided to construct tyre cores on the carcase drum,
- wherein the individual carcase constructing stations are disposed locally separated from one another,
- having at least one carcase drum (16), which is displaceable between these carcase constructing stations in a controlled manner,
- wherein the individual carcase constructing stations (4, 5, 6, 7) are each provided with at least one fitting arrangement to fit the carcase drum with components, which are identical in nature, and with at least one conveying arrangement for supplying the components to the fitting arrangement,
- having at least two belt constructing stations (8, 10)
- of which one is provided in order to construct at least one belt ply (10) on a belt drum,
- and the other is provided in order to construct a tread strip (8) on the belt drum,
- wherein the individual belt constructing stations are disposed locally separated from one another,
- having at least one belt drum (13), which is displaceable between these belt constructing stations in a controlled manner,
- wherein the individual belt constructing stations (8, 10) are each provided with at least one fitting arrangement to fit the belt drum with components, which are identical in nature, and with at least one conveying arrangement for supplying the components to this fitting arrangement,
- having a device (3) for bringing together the carcase, which is constructed from the individual components on the carcase drum in the carcase constructing stations, and the belt bundle, which is constructed from the individual components on the belt drum in the belt constructing stations,
- wherein at least one carcase constructing station and/or one belt constructing station is provided with at least two fitting arrangements, which are controllable independently of each other, in order to fit with components which are identical in nature, at least one conveying arrangement being associated with each of said fitting arrangements in order to supply the components which are identical in nature.

2. Apparatus for the construction of pneumatic vehicle tyres according to the features of claim 1,
- wherein at least one carcase constructing station (7) for constructing lateral walls is provided with at least two fitting arrangements (20a, 20b), which are controllable independently of each other, per lateral wall of a tyre, and with a conveying arrangement (29a, b), which is to be associated per fitting arrangement.

3. Apparatus for the construction of pneumatic vehicle tyres according to the features of claim 1 or 2,
- wherein all of the carcase constructing stations (4, 5, 6, 7) are provided with at least two fitting arrangements (20a, 20b, 17a, 17b, 18a, 18b, 19a, 19b), which are controllable independently of each other and each have a conveying arrangement (29a, b, 32a, b, 34a, b, 36a, b) for supplying components which are identical in nature.

4. Apparatus for the construction of pneumatic vehicle tyres according to the features of one or more of claims 1 to 3, wherein at least one belt constructing station (10) for constructing belt plies on a belt drum is provided with at least two fitting arrangements (24a, b), which are controllable independently of each other, per belt ply and each have a conveying arrangement (39a, b).

5. Apparatus for the construction of pneumatic vehicle tyres according to the features of one or more of claims 1 to 4, wherein each belt constructing station (8, 10, 11) is provided with at least two fitting arrangements (22a, b, 24a, b, 25a, b), which are controllable independently of each other and each have a conveying arrangement (37a, b, 39a, b, 40a, b) for supplying components which are identical in nature.

6. Apparatus for the construction of pneumatic vehicle tyres according to the features of one or more of claims 1 to 5, wherein the carcase drum (16) is configured as an end-closing head.

7. Method of changing prefabricated components, which are identical in nature, in order to construct carcase bundles, having an inner layer, at least one radially outer carcase layer which is provided with reinforcing members, and two lateral tyre portions on a carcase drum within a carcase constructing station and/or in order to construct a belt bundle having a belt ply, which is fitted with reinforcing members, and a tread strip on a belt drum within a belt constructing station for the producion of pneumatic vehicle tyres,
- wherein at least some of the components, which are identical in nature, are supplied selectively by one of at least two different fitting arrangements to fit the same constructing station.

## Revendications

1. Equipement pour monter des pneumatiques pour véhicules, avec un empilage de carcasse comportant une couche intérieure, au moins une nappe de carcasse, deux éléments de flancs et deux talons de tringle, et avec un empilage de ceinture comportant au moins une nappe d'armature et une bande de roulement,
- avec au moins quatre stations de montage de carcasse (4, 5, 6, 7),
- dont l'une (6) est destinée au montage de la couche intérieure sur un tambour de carcasse,
- dont l'une (7) est destinée au montage de flancs sur le tambour de carcasse,
- dont l'une (5) est destinée au montage d'au moins une nappe de carcasse sur le tambour de carcasse,
- dont au moins l'une (4) est destinée au montage de tringles sur le tambour de carcasse,
- où les différentes stations de montage de carcasse sont disposées en étant spatialement séparées les unes des autres,
- avec au moins un tambour de carcasse (16) pouvant se déplacer en étant pilotés entre ces stations de montage de carcasse,
- où chacune des différentes stations de montage de carcasse (4, 5, 6, 7) comporte au moins un dispositif de garnissage, destiné à garnir de composants de nature identique le tambour de carcasse, et au moins un dispositif de transport, pour amener les composants au dispositif de garnissage,
- avec au moins deux stations de montage de ceinture (8, 10),
- dont l'une est destinée au montage d'au moins une nappe d'armature (10) sur un tambour de ceinture,
- et l'autre est destinée au montage d'une bande de roulement (8) sur le tambour de ceinture,
- où les différentes stations de montage de ceinture sont disposées spatialement séparées les unes des autres,
- avec au moins un tambour de ceinture (13), pouvant se déplacer en étant pilotés entre ces stations de montage de ceinture,
- où chacune des différentes stations de montage de ceinture (8, 10) possède au moins un dispositif de garnissage, pour garnir de composants de nature identique le tambour de ceinture, et au moins un dispositif de transport pour amener les composants à ce dispositif de garnissage,
- avec un dispositif (3) pour assembler la carcasse, montée dans les stations de montage de carcasse sur le tambour de carcasse à partir des composants individuels, et l'empilage de ceinture, monté dans les stations de montage de ceinture à partir des composants individuels sur le tambour de ceinture,
- où au moins une station de montage de carcasse et/ou une station de montage de ceinture est réalisée avec au moins deux dispositifs de garnissage, pouvant être commandés indépendamment l'un de l'autre, pour mettre en place des composants de nature identique, a chacun desquels est affecté au moins un dispositif de transport destiné à amener les composants de nature identique.

2. Dispositif pour monter des pneumatiques pour véhicules selon les caractéristiques de la revendication 1,
- où au moins une station de montage de carcasse (7), destinée au montage de flancs, est réalisée avec au moins deux dispositifs de garnissage (20a, 20b), pouvant être commandés indépendamment l'un de l'autre, pour chaque flanc d'un pneu, chacune possédant au moins un dispositif de transport (29a, b), qui lui est affecté, par dispositif de garnissage.

3. Dispositif pour monter des pneumatiques pour véhicules selon les caractéristiques de la revendication 1 ou 2,
- où toutes les stations de montage de carcasse (4, 5, 6, 7) sont réalisées avec au moins deux dispositifs de qarnissaqe pouvant être commandés indépendamment l'un de l'autre (20a, 20b, 17a, 17b, 18a, 18b, 19a, 19b), chacune comportant un dispositif de transport (29a, b, 32a, b, 34a, b, 36a, b) pour amener des composants de nature identique.

4. Dispositif pour monter des pneumatiques pour véhicules selon les caractéristiques de l'une ou de plusieurs des revendications 1 à 3, dans lequel l'au moins une station de montage de ceinture (10), destinée à monter des nappes d'armature sur un tambour de ceinture, comporte au moins deux dispositifs de garnissage (24a, b), pouvant être commandés indépendamment l'un de l'autre, par nappe d'armature, chacune comportant au moins un dispositif de transport (39a, b).

5. Dispositif pour monter des pneumatiques pour véhicules selon les caractéristiques de l'une ou de plusieurs des revendications 1 à 4, où chaque station de montage de ceinture (8, 10, 11) comporte au moins deux dispositifs de garnissage (22a, b, 24a, b, 25a, b), pouvant être commandés indépendamment l'un de l'autre, chacune comportant un dispositif de transport (37a, b, 39a, b, 40a, b) pour amener des composants de nature identique.

6. Dispositif pour monter des pneumatiques pour véhicules selon les caractéristiques de l'une ou plusieurs des revendications 1 à 5, où le tambour de carcasse (16) est configuré comme une tête de galbage.

7. Procédé pour changer des composants préfabriqués, de nature identique, pour monter des empilages de carcasse, avec une couche intérieure, avec au moins une couche de carcasse radialement extérieure, garnie de renforcements, et avec deux éléments latéraux de pneu, sur un tambour de carcasse, à l'intérieur d'une station de montage de carcasse, et/ou pour monter un empilage de ceinture, avec une nappe d'armature garnie de renforcements et une bande de roulement sur un tambour de ceinture, à l'intérieur d'une station de montage de ceinture, pour la confection de pneumatiques pour véhicules,
- où les composants de nature identique sont au moins partiellement amenés au choix par l'un d'au moins deux dispositifs de garnissage différents, pour garnir la même station de montage.
